Europäisches Patentamt

European Patent Office

Office européen des brevets

(19)

(11) Numéro de publication: **0 001 137**

**A1**

# (12) DEMANDE DE BREVET EUROPEEN

(21) Numéro de dépôt: 78200147.3

(22) Date de dépôt: 21.08.78

(51) Int. Cl.²: **G 01 N 1/00**
**G 05 D 11/13**

---

(30) Priorité: 31.08.77 BE 180559

(43) Date de publication de la demande:
21.03.79 Bulletin 79/6

(84) Etats contractants désignés:
CH DE FR GB NL SE

(71) Demandeur: JOTTIER, Christian F.
Terlinden 18
B-1530 Herfelingen(BE)

(72) Inventeur: JOTTIER, Christian F.
Terlinden 18
B-1530 Herfelingen(BE)

(74) Mandataire: DE BRABANTER, Maurice et al,
Bureau VANDER HAEGHEN 63 Avenue de la Toison d'Or
B-1060 Bruxelles(BE)

---

(54) Appareil pour le traitement de fluides.

(57) L'invention concerne un appareil pour le traitement physique ou chimique, par exemple à des fins d'analyse ou de synthèse, de fluides, tels que des liquides, des gaz ou des solides pulvérulents.

L'appareil suivant l'invention comprend essentiellement une chambre de traitement (2) étanche vis-à-vis de l'atmosphère, un piston (3) pour faire varier le volume de cette chambre, des moyens (4,5,6) pour soumettre le piston à un mouvement de va-et-vient, au moins deux conduits (8,9,10,11,12, 13; qui sont munis chacun d'une vanne (14, 15, 16, 17, 18, 19) qui sont reliés chacun à une source de fluide (29,30,31,32,33, 34) et qui débouchent chacun dans ladite chambre, ainsi qu'un conduit de sortie (26) de cette chambre, également muni d'une vanne (27), les vannes et le piston étant commandés selon un programme ou une séquence prédéterminés, les fluides étant amenés dans la chambre par une aspiration ou dépression créé dans cette chambre par un déplacement du piston.

EP 0 001 137 A1

Croydon Printing Company Ltd.

## Appareil de traitement de fluides

La présente invention est relative à un appareil de traitement de fluides.

Le terme " traitement", tel qu'il est utilisé dans le présent mémoire, désigne toute opération physique ou chimique, dans laquelle au moins deux fluides sont mis en présence l'un de l' autre. Parmi les traitements visés, on peut citer, à titre d'exemples non limitatifs, les mélanges de fluides, les analyses de produits chimiques (liquides, gazeux ou solides), les réactions de synthèse de produits chimiques, etc.

Quant au terme " fluide", tel qu'il est utilisé dans le présent mémoire, il désigne un liquide, une émulsion ou suspension d' un solide dans un liquide, un gaz, voire même un solide sous forme pulvérulente.

On connaît des appareils de traitement de fluides, notamment des appareils automatiques d'analyse ou de réaction mettant en oeuvre des réactions chimiques. Ces appareils connus présentent souvent des inconvénients. Ainsi, dans les appareils d'analyse connus, le mélange de l'échantillon à analyser et du ou des réactifs s'effectue en général en milieu atmosphérique. Au surplus, ces appareils connus exigent le plus souvent des moyens distincts pour le prélèvement de l'échantillon à analyser, la distribution du ou des réactifs, la dilution et le transfert du mélange ou de la solution obtenue vers un dispositif de détection ou de traitemen

La présente invention vise à remédier à ces inconvénients et a pour objet un appareil de traitement de fluides entièrement automatique, dans lequel toutes les opérations nécessaires s'effectuent à l'abri de l'atmosphère.

L'appareil suivant l'invention se caractérise essentiellement
par le fait qu'il comprend une chambre de traitement étanche vis-
à-vis de l'atmosphère, un piston pour faire varier le volume de
cette chambre, des moyens pour actionner le piston, au moins
deux conduits qui sont munis chacun d'une vanne, qui sont reliés chacun à une source de fluide et qui débouchent chacun
dans ladite chambre, et un conduit de sortie de ladite chambre,
également muni d'une vanne, les fluides étant amenés dans la
chambre de traitement par une aspiration ou dépression créée
dans cette chambre par un déplacement du piston.

Selon une particularité complémentaire de l'appareil suivant l'
invention, celui-ci comporte également un conduit qui est muni
d'une vanne et permet de mettre la chambre de traitement en
communication avec l'atmosphère. De préférence, l'appareil suivant l'invention comporte plusieurs conduits munis chacun
d'une vanne et débouchant dans la chambre de traitement
à des niveaux différents, ces vannes étant avantageusement
commandées par des moyens électriques, pneumatiques, hydrauliques ou analogues suivant un programme prédéterminé.

L'appareil suivant l'invention est également avantageusement
muni de moyens permettant de régler la température du contenu
de la chambre de traitement, ces moyens étant, de préférence,
constitués par un circuit fermé dans lequel circule un fluide de
chauffage ou de refroidissement, ce circuit passant axialement
dans le piston et dans la chambre de traitement, un échangeur de
chaleur étant intercalé dans ce circuit.

D'autres détails et particularités de l'invention ressortiront
de la description qui sera donnée ci-après d'appareils selon l'
invention. Cette description n'est donnée qu'à titre d'exemple
et ne limite pas l'invention. Dans cette description, il est
fait référence aux dessins ci-annexés, dans lesquels :

- la figure 1 montre schématiquement une première forme de réalisation d'un appareil de traitement de fluides selon l'invention;

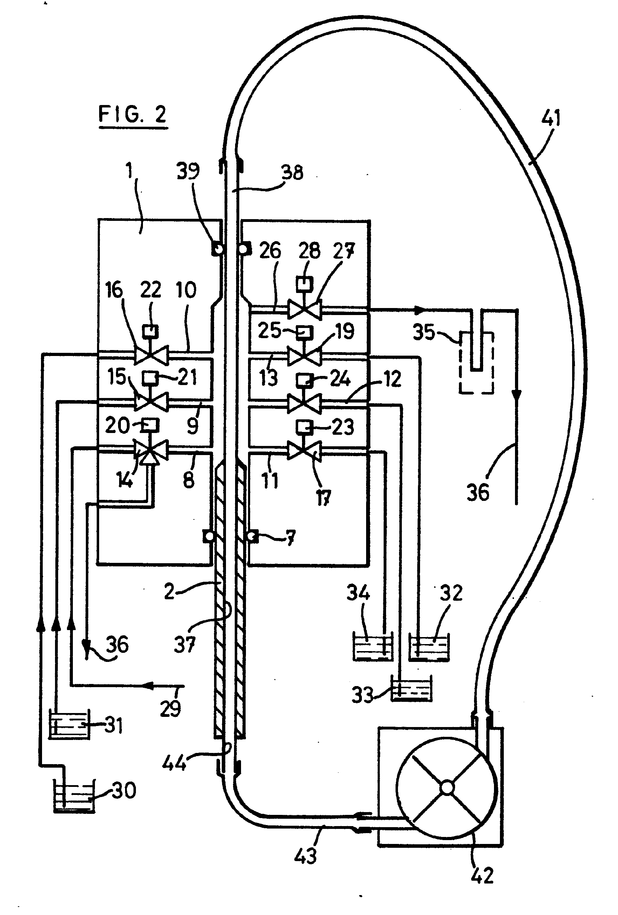

- la figure 2 montre schématiquement une seconde forme de réalisation d'un appareil suivant l'invention, et

- la figure 3 illustre un mode de fonctionnement de l'appareil selon la figure 1.

Dans ces différentes figures, les mêmes notations de référence désignent des éléments identiques ou similaires.

Dans la description suivante, l'invention est illustrée par un appareil d'analyse, mais il est évident, comme on l'a déjà signalé plus haut, que l'invention n'est pas limitée à des fins d'analyse et peut servir à d'autres opérations physico-chimiques.

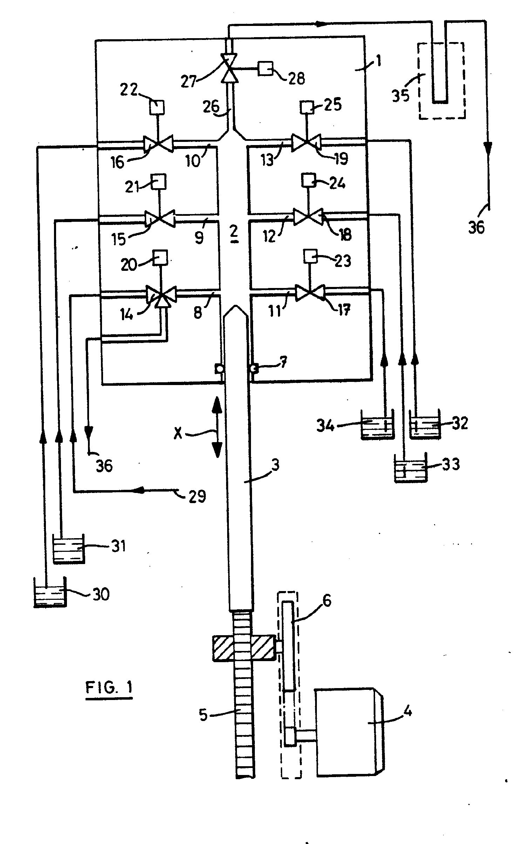

L'appareil représenté à la figure 1 comporte un corps 1 dans lequel est prévue une chambre 2. Dans celle-ci, un piston 3 peut se déplacer alternativement sous l'impulsion d'un moteur pas à pas 4 par l'intermédiaire d'un système à crémaillère 5 et d'un réducteur 6.

Une garniture 7 assure l'étanchéité entre la paroi interne de la chambre 2 et le piston 3.

La chambre 2 de l'appareil est en communication avec l'extérieur par l'intermédiaire de six conduits 8, 9, 10, 11, 12, 13, débouchant dans ses parois, chaque conduit étant muni d'une vanne de passage à deux ou trois voies, 14, 15, 16, 17, 18, 19, dont la commande, dans l'exemple représenté, s'effectue par l'intermédiaire de six moteurs pas à pas 20, 21, 22, 23, 24, 25.

Un conduit 26 percé dans l'extrémité libre de forme conique de la chambre 2 met celle-ci en communication avec l'extérieur par l'intermédiaire d'une vanne à deux voies, 27, commandée par un moteur pas à pas 28.

L'appareil décrit à la figure 1 permet, par exemple, d'effectuer une analyse chimique automatique avec dilution préalable de l'échantillon et la possibilité d'utiliser trois réactifs distincts.

De plus, l'étalonnage de l'appareil peut être réalisé par l'introduction dans la chambre de réaction 2 d'un étalon en lieu et place de l'échantillon à analyser.

Une source d'échantillon à analyser 29 est raccordée à la vanne 14, un agent de dilution (tel que l'eau ou un solvant organique) 30 à la vanne 16, la solution étalon 31 à la vanne 15, le premier réactif 32 à la vanne 19, le deuxième réactif 33 à la vanne 18, le troisième réactif 34 à la vanne 17.

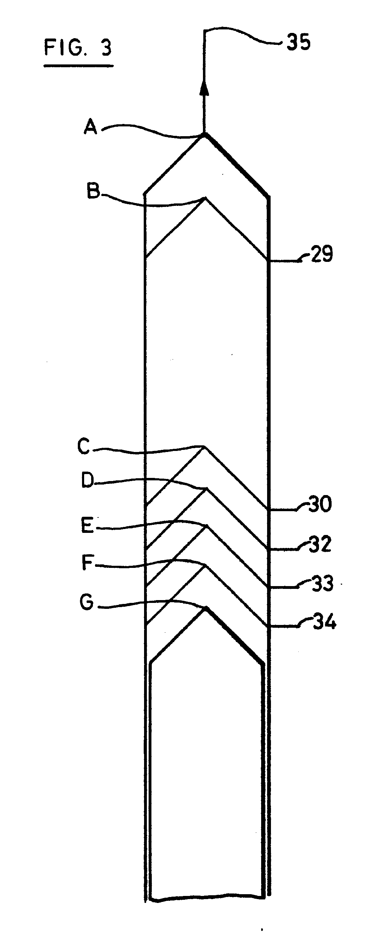

Les figures 1 et 3 illustrent schématiquement le programme de l'appareil décrit à titre d'exemple.

Le prélèvement de l'échantillon est réalisé en ouvrant la vanne 14 et en déplaçant le piston 3 d'une course présélectionnée AB correspondant au volume exigé par l'analyse. La dilution avec mélange automatique du diluant et de l'échantillon est réalisée en ouvrant la vanne 16 et en déplaçant le piston 3 d'une course présélectionnée BC correspondant au volume exigé par l'analyse.

Le dosage du premier réactif est réalisé en ouvrant la vanne 19 et en déplaçant le piston 3 d'une course CD correspondant au volume exigé par l'analyse.

Le mélange du premier réactif et de l'échantillon dilué est réalisé, les vannes du réacteur étant toutes fermées, par le déplacement du piston 3 de D à G, et son retour à la position D.

Un temps de réaction, réglable en fonction de la méthodologie utilisée, est prévu dans le programme d'automatisme. Le dosage du deuxième réactif est réalisé en ouvrant la vanne 18 et en déplaçant le piston 3 d'une course DE correspondant au volume exigé par l'analyse.

Le mélange du deuxième réactif avec l'échantillon dilué et le premier réactif est réalisé, les vannes du réacteur étant toutes fermées, par le déplacement du piston 3 de E à G, et son retour à la position E.

Un nouveau temps de réaction, réglable en fonction de la méthodologie utilisée, est prévu dans le programme d'automatisme.

Le dosage du troisième réactif est réalisé en ouvrant la vanne 17 et en déplaçant le piston 3 d'une course EF correspondant au volume exigé par l'analyse.

Le mélange du troisième réactif avec l'échantillon dilué et les deux premiers réactifs est réalisé, les vannes du réacteur étant toutes fermées, par le déplacement du piston 3 de F à G et son retour à la position F.

Un nouveau temps de réaction, réglable en fonction de la méthodologie utilisée, est prévu dans le programme d'automatisme.

Le transfert de la solution réactionnelle vers un dispositif de détection 35 est réalisé en ouvrant la vanne 27 et en déplaçant le piston 3 d'une course FA correspondant à la totalité des volumes introduits dans la chambre du réacteur par les déplacements successifs du piston 3 sous l'impulsion du moteur pas à pas 4.

Lorsque l'analyse est terminée, le rinçage de la chambre 2 est réalisé en ouvrant la vanne 16 (eau de dilution) et en déplaçant le piston 3 de la course maximum AG.

La solution de rinçage est envoyée à un égout 36 par retour du piston 3 en position A.

Cette opération de rinçage peut se faire plusieurs fois si nécessaire.

La standardisation s'effectue suivant le même processus que celui décrit ci-dessus, l'échantillon 29 étant simplement remplacé par un étalon 31, la vanne 15 étant ouverte en lieu et place de la vanne 14, et le déplacement du piston 3 étant effectué suivant une course identique AB.

Dans la seconde forme de réalisation de l'invention, l'appareil est muni de moyens de réglage de la température de la chambre 2. Ces moyens sont constitués par un circuit de circulation d'eau chaude ou d'un autre liquide de chauffage ou de refroidissement, comprenant un alésage axial 37 prévu dans le piston 2 et prolongé par un tube rigide 38, un joint d'étanchéité 39
étant prévu à la sortie du tube rigide 38 hors de la chambre 2.
A l'extrémité 40 du tube rigide 38 est raccordé un tuyau souple
41 qui est relié à un échangeur de chaleur schématisé en 42
comportant un élément de chauffage ou de refroidissement et
une pompe, la sortie de l'échangeur 42 étant reliée, également
par un tuyau souple 43,à un tuyau rigide 44 relié à l'alésage
37 du piston 2.

Grâce aux tuyaux souples 41 et 43, le piston 2 et le tube rigide
40 qui en est solidaire peuvent se déplacer suivant un mouvement de va-et-vient dans le sens des flèches X sous la commande
du moteur 4, de la crémaillère ou vis sans fin 5 et du réducteur 6.

Comme on l'a vu plus haut, l'invention a pour objet un réacteur
de traitement de fluides, par exemple de préparation et d'analyse comprenant des moyens permettant de prélever une dose
déterminée d'un échantillon et de le transférer dans une chambre isolée de l'atmosphère, des moyens pour prélever si nécessaire une dose déterminée d'un diluant et de le transférer dans
la même chambre, des moyens de prélever au moins une dose déterminée d'un réactif et de le transférer dans la même chambre,
des moyens de mélanger l'échantillon avec le ou les réactifs
avec le diluant éventuel à l'abri de l'atmosphère, ainsi que
des moyens pour transférer sous pression le mélange de solutions ainsi réalisé dans un système généralement quelconque
pour détecter le résultat ou pour transférer une partie de ce
mélange vers un autre réacteur ou toute autre utilisation.

Les opérations permettant le prélèvement volumétrique d'échantillons, le dosage de volumes précis du ou des réactifs, la
dilution des échantillons, le transfert du mélange ainsi
formé vers la détection ou toute autre utilisation, sont
réalisées par le moyen d'un seul piston centralisant les fonctions décrites ci-dessus.

Une logique électronique, pneumatique ou toute autre programmation active,un moteur pas à pas, un moteur à rotation continue, un moteur linéaire, un vérin pneumatique ou tout autre moyen permet de commander les déplacements de ce piston proportionnellement aux volumes et à la chronologie nécessaire aux réactions ou à la préparation.

L'appareil suivant l'invention peut être utilisé, par exemple, pour l'analyse d'échantillons liquides, gazeux et solides, dans les installations de distribution d'eau (détermination de la dureté de l'eau, du fluor, de l'oxygène dissous, du chlore, etc) dans les installations d'épuration des eaux (dosage de la silice, du fer, des ions $SO_4^-$, etc.), dans les installations de contrôle des effluents industriels liquides et gazeux pour prévenir la pollution des eaux de rivières et de l'atmosphère, dans l'industrie métallurgique (dosage des minerais), dans l'industrie chimique en général (contrôles des produits synthétisés) dans le secteur médical (analyse des liquides corporels, tels que sang et urine). L'appareil suivant l'invention peut servir à des analyses calorimétriques, conductimétriques, thermochimiques, etc., pour détecter des éléments minéraux (fer, cobalt, aluminium, calcium, cuivre, magnésium, manganèse, nickel, chrome, mercure, plomb, bismuth, zinc, fluor, chlore, iode, arsenic, ions nitrate, nitrite, sulfate, ammonium, chlorure, sulfite, cyanure, phosphate, sulfure, etc.), ou des éléments organiques (formol, tétrachlorure de carbone, sulfure de carbone, chloroforme, hydrazine, détergents, sucres, anhydride carbonique, oxyde de carbone, monomères acryliques, styrène, benzène, toluène, xylène, etc.).

L'appareil suivant l'invention peut aussi être utilisé pour la synthèse ou l'extraction de produits chimiques à l'échelle du laboratoire, à l'échelle semi-industrielle, voire même à l'échelle industrielle.

L'appareil selon l'invention permet, à l'encontre des systèmes et dispositifs connus à ce jour, de commander à l'aide d'un ensemble générateur d'automatisme ou autre, une série d'opérations d'analyse et de préparation aisément déterminables d'avance. En effet, la conception du réacteur permet son utilisation pour l'automatisation d'un nombre important d'analyses chimiques et autres réactions.

Il est évident cependant que l'invention n'est pas limitée aux formes d'exécution décrites, et que bien des modifications pourraient y être apportées sans sortir du cadre de la présente invention.

REVENDICATIONS

1. Appareil pour le traitement de fluides, caractérisé en ce qu'il comprend une chambre de traitement étanche vis-à-vis de l'atmosphère, un piston pour faire varier le volume de cette chambre, des moyens pour actionner le piston, au moins deux conduits qui sont munis chacun d'une vanne, qui sont reliés chacun à une source de fluide et qui débouchent chacun dans ladite chambre, et un conduit de sortie de ladite chambre, également muni d'une vanne, les fluides étant amenés dans la chambre de traitement par une aspiration ou dépression créée dans cette chambre par un déplacement du piston.

2. Appareil suivant la revendication 1, caractérisé en ce qu'il comprend également un conduit qui est muni d'une vanne et permet de mettre la chambre de traitement en communication avec une atmosphère.

3. Appareil suivant l'une ou l'autre des revendications précédentes, caractérisé en ce que les conduits susdits débouchent dans la chambre de traitement à des niveaux sensiblement identiques.

4. Appareil suivant l'une ou l'autre des revendications précédentes, caractérisé en ce qu'il comprend plusieurs conduits munis chacun d'une vanne et débouchant dans la chambre de traitement à des niveaux différents.

5. Appareil suivant l'une ou l'autre des revendications précédentes, caractérisé en ce que les vannes des conduits précités sont des vannes à plusieurs voies commandées par des moyens électriques, pneumatiques, hydrauliques ou autres.

6. Appareil suivant l'une ou l'autre des revendications précédentes, caractérisé en ce que les mouvements de va-et-vient du piston sont commandés par des moyens électriques, pneumatiques, hydrauliques ou analogues.

7. Appareil suivant l'une ou l'autre des revendications 5 et 6, caractérisé en ce que les vannes précitées, ainsi que le piston,
sont commandés selon un programme prédéterminé. 0001137

8. Appareil suivant l'une ou l'autre des revendications précédentes,caractérisé en ce qu'au moins un des conduits précités
est relié à une source d'un diluant ou solvant.

9. Appareil suivant l'une ou l'autre des revendications précédentes,caractérisé en ce que les fluides introduits par des conduits
dans la chambre de traitement sont mélangés par un mouvement de
va-et-vient du piston, pendant que toutes les vannes de l'appareil sont fermées ou par admission d'un gaz dans la chambre
après mise en dépression de celle-ci.

10. Appareil suivant l'une ou l'autre des revendications précédentes, caractérisé en ce qu'au moins un des conduits débouchant
dans la chambre de traitement est relié à un réservoir d'un liquide de rinçage ou de lavage de cette chambre.

11. Appareil suivant l'une ou l'autre des revendications précédentes, caractérisé en ce que les doses des fluides introduites
dans la chambre de traitement sont réglées par un déplacement
à course et/ou à temps contrôlés du piston.

12. Appareil suivant l'une ou l'autre des revendications précédentes, caractérisé en ce que les opérations d'introduction
des échantillons de fluides à traiter, de mélange de ceux-ci
et de transfert hors de la chambre sont assurés par le déplacement de l'unique piston.

13. Appareil suivant l'une ou l'autre des revendications précédentes, caractérisé en ce que, dans le cas où l'appareil est
utilisé à des fins d'analyse de fluides, le prélèvement de l'
échantillon de fluide à analyser est réalisé par le déplacement
à course et/ou à temps contrôlés du piston,seule la vanne prévue
dans le conduit relié à la source d'échantillon étant alors
ouverte pour permettre l'aspiration de la dose requise de l'
échantillon dans la chambre.

14. Appareil suivant la revendication 13, caractérisé en ce
que la dilution de l'échantillon est réalisée par le déplacement

0001137

à course et/ou à temps contrôlés du piston, la seule vanne prévue dans le conduit relié à la source de diluant étant alors ouverte pour permettre l'aspiration de la dose requise de l' agent diluant dans la chambre.

15. Appareil suivant l'une ou l'autre des revendications 13 et 14, caractérisé en ce que le prélèvement du ou des réactifs d'analyse est réalisé par le déplacement à course et/ou à temps contrôlés du piston, seules la ou les vannes prévues dans le ou les conduits reliés à la source ou aux sources de réactifs étant alors ouvertespour permettre l'aspiration de la dose requise du ou des réactifs dans la chambre.

16. Appareil suivant l'une ou l'autre des revendications précédentes, caractérisé en ce que la chambre de traitement est munie de moyens permettant de régler la température de son contenu.

17. Appareil suivant la revendication 16, caractérisé en ce que les moyens de réglage sont constitués par un circuit fermé dans lequel circule un fluide de chauffage ou de refroidissement, ce circuit passant axialement dans le piston et dans la chambre de traitement, un échangeur de chaleur étant intercalé dans ce circuit.

FIG. 1

0001137

FIG. 2

3/3    0001137

FIG. 3

## DOCUMENTS CONSIDERES COMME PERTINENTS

| Categorie | Citation du document avec indication, en cas de besoin, des parties pertinentes | Revendication concernee |
|---|---|---|
| | FR - A - 2 293 706 (E.I. DU PONT DE NEMOURS AND CO.)<br><br>* Page 4, ligne 26 à page 5, ligne 28, page 6, ligne 34 à page 7, ligne 9, page 7, ligne 35 à page 9, ligne 31, figure 1 *<br><br>-- | 1,4-6, 8,11, 12,14, 15 |
| | US - A - 3 752 197 (W.J. AMBROSE at al.)<br><br>* Colonne 3, ligne 27 à colonne 4, ligne 25, colonne 9, ligne 7 à colonne 10, ligne 54, figure 5 *<br><br>-- | 1,4,8, 10 |
| | FR - A - 2 211 645 (ABBOTT LAB.)<br><br>* Page 4, lignes 5-35 *<br><br>---- | 7 |

**CLASSEMENT DE LA DEMANDE (Int. Cl.²)**

G 01 N  1/00
G 05 D 11/13

**DOMAINES TECHNIQUES RECHERCHES (Int. Cl.²)**

G 01 N  1/00
G 01 N  1/28
B 01 L  3/02
B 01 L 11/00
G 05 D 11/00
G 05 D 11/13
B 01 J  4/02

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille, document correspondant

| X | Le présent rapport de recherche a été établi pour toutes les revendications |
|---|---|

| Lieu de la recherche | Date d'achèvement de la recherche | Examinateur |
|---|---|---|
| La Haye | 08-12-1978 | ANTHONY |

OEB Form 1503.1  06.78